# DEMANDE DE BREVET EUROPEEN

(11) **EP 4 129 421 A1**
(43) Date de publication de la demande: **08.02.2023**
(21) Numéro de dépôt: 22187300.3
(22) Date de dépôt: 27.07.2022
(51) Int. Cl.: A62C 3/07, A62C 35/02, A62C 35/11, B60L 3/00, B60L 3/12, A62C 37/36, A62C 37/16, G08B 17/06, A62C 37/40

(54) **ENSEMBLE COMPORTANT UN SYSTÈME DE SÉCURITÉ ET AU MOINS UN VÉHICULE ÉLECTRIQUE OU HYBRIDE ÉLECTRIQUE**

(30) Priorité: 02.08.2021 FR 2108414
(71) Demandeur: Hecker, Richard, 67810 HOLTZHEIM (FR)
(72) Inventeur: Hecker, Richard, 67810 HOLTZHEIM (FR)
(74) Mandataire: Hege, Frédéric

(57) **Abrégé**

La présente invention concerne un ensemble comportant un système de sécurité et au moins un véhicule électrique ou hybride électrique, ledit système de sécurité comprenant :
- au moins un capteur de température disposé sur chacun desdits au moins un véhicule,
- au moins un module d'extinction comportant un agent extincteur, disposé sur chacun desdits au moins un véhicule,
- un contrôleur disposé hors desdits au moins un véhicule, ledit contrôleur comportant :
- un moyen de réception de données en provenance dudit au moins un capteur de température,
- un moyen de décision de l'envoi ou non d'une alarme à une centrale d'alarmes en fonction des données reçues,
- un moyen d'envoi de ladite alarme, et
- un moyen de commande apte à commander au module d'extinction la libération dudit agent extincteur hors dudit au moins un module d'extinction.

La présente invention concerne également un procédé d'installation et d'utilisation d'un ensemble selon l'invention.

## Description

La présente invention se situe dans le domaine de la sécurité liée aux véhicules électriques et hybrides électriques. Elle concerne plus particulièrement un ensemble comportant un système de sécurité et au moins un véhicule électrique ou hybride électrique.

Présentant l'avantage de faibles rejets de CO₂, Les véhicules électriques et hybrides électriques connaissent un développement important. Ces véhicules comportent des batteries, habituellement de type lithium-ion, qui peuvent subir une combustion spontanée en cas de choc, parfois de faible intensité. La combustion peut débuter immédiatement lors du choc, ou après plusieurs minutes, plusieurs heures, ou même plusieurs jours. Ainsi dans le cas d'un véhicule accidenté, la combustion peut avoir lieu sur le lieu d'accident, ou lors de la tractation du véhicule par une dépanneuse, ou dans le garage où ont lieu les réparations, ou encore dans une casse.

Les combustions de batteries telles que les batteries lithium-ion sont particulièrement problématiques en ce qu'elles ne peuvent pas être arrêtées avant combustion complète. Il n'est possible que de refroidir la zone afin d'empêcher la propagation du feu, ce qui est habituellement réalisé avec de l'eau, et peut nécessiter de l'ordre de 10 à 15 m³ d'eau pour une batterie de voiture. Ces eaux de refroidissement, extrêmement toxiques, doivent ensuite être récupérées et retraitées, ce qui n'est pas toujours facile à réaliser parfaitement, produisant des pollutions, et a un coût important.

Lorsqu'une batterie de véhicule électrique prend feu dans un lieu de stockage tel qu'un garage ou une casse, la détection de la combustion peut prendre trop de temps, et le feu se propager aux véhicules voisins. Ça peut notamment être le cas pendant la nuit ou les jours de fermeture.

Un objet de la présente invention est de permettre une détection très rapide de la combustion d'une batterie, afin de pouvoir le combattre au plus tôt.

Un autre objet de la présente invention est de ralentir la propagation du feu de combustion de batterie afin de donner le temps aux pompiers d'arriver, et de réduire les risques de propagation à des véhicules voisins.

La présente invention a pour objet de répondre au moins en partie aux objets précités en proposant un système comportant des moyens de détection d'un départ de feu, et en cas de détection des moyens d'envoi d'alarme et de ralentissement du feu. A cet effet, elle propose un ensemble comportant un système de sécurité et au moins un véhicule électrique ou hybride électrique, ledit système de sécurité comprenant :
- au moins un capteur de température disposé sur chacun desdits au moins un véhicule,
- un contrôleur disposé hors desdits au moins un véhicule, ledit contrôleur comportant :
   - un moyen de réception de données en provenance dudit au moins un capteur de température,
   - un moyen de décision de l'envoi ou non d'une alarme à une centrale d'alarmes en fonction des données reçues,
   - un moyen d'envoi de ladite alarme.

Grâce à ces dispositions, une combustion spontanée du véhicule peut être détectée au plus tôt, les pompiers pouvant être appelés sur place avant que le feu ne prenne de l'ampleur. Le départ de feu peut aussi être ralenti, ce qui permet de réduire les risques de propagation du feu hors du véhicule.

Selon d'autres caractéristiques :
- ledit système de sécurité peut comprendre au moins un module d'extinction comportant un agent extincteur, disposé sur chacun desdits au moins un véhicule, et ledit contrôleur comporter un moyen de commande apte à commander au module d'extinction la libération dudit agent extincteur hors dudit au moins un module d'extinction
- ledit contrôleur peut être configuré pour calculer la vitesse d'élévation de la température mesurée par ledit capteur de température, par exemple en degrés Celsius par minute, ce qui est un moyen particulièrement pertinent de détecter un départ de feu,
- au moins un capteur de température et au moins un module d'extinction peuvent être disposés dans l'habitacle dudit véhicule ; les batteries du véhicule étant souvent sous l'habitacle, un départ de feu par la batterie se propage très rapidement dans l'habitacle, et il est important de ralentir le feu dans l'habitacle qui comporte habituellement des éléments hautement inflammables,
- au moins un capteur de température peut être disposé sur au moins une batterie dudit véhicule, par exemple par l'intermédiaire d'une pince disposée sur un caisson de ladite au moins une batterie, ce qui permet de détecter au plus tôt un départ de feu sur la batterie,
- le système de sécurité peut comporter au moins un capteur optique apte à capturer des images d'au moins un desdits véhicules, ce qui permet à un opérateur distant de confirmer visuellement une détection de départ de feu,
- ledit ensemble peut comporter au moins deux véhicules électriques ou hybride électriques, ce qui permet de réduire les coûts en utilisant un seul système de sécurité surveillant plusieurs véhicules,
- ledit ensemble peut comporter un boîtier dans lequel sont disposés le contrôleur, un émetteur et une batterie, et ledit au moins un capteur de température et ledit au moins un module d'extinction sont reliés audit boîtier par des câbles, ce qui rend facile l'intégration d'un véhicule à un ensemble selon l'invention. De plus l'utilisation de câbles rend plus fiable la communication entre le capteur de température et le contrôleur, ce qui est particulièrement important dans le domaine de la sécurité.

La présente invention concerne également un procédé d'installation et d'utilisation d'un ensemble selon l'invention comportant les étapes suivantes :
- disposition d'au moins un capteur de température sur ledit véhicule à l'arrêt,
- réception de données en provenance du capteur de température par un contrôleur,
- en fonction des données reçues, décision par ledit contrôleur d'envoyer ou non une alarme à une centrale d'alarmes.

Grâce à ces dispositions, une combustion spontanée du véhicule peut être détectée au plus tôt, les pompiers pouvant être appelés sur place avant que le feu ne prenne de l'ampleur. Le départ de feu peut aussi être ralenti, ce qui permet de réduire les risques de propagation du feu hors du véhicule.

Selon d'autres caractéristiques :
- le procédé peut comprendre en outre une étape de disposition d'au moins un module d'extinction comportant un agent extincteur sur ledit véhicule,
- ladite décision prise par ledit contrôleur peut être d'envoyer une alarme dès que la température mesurée par le capteur de température s'élève à une vitesse supérieure à un premier seuil d'élévation, défini par exemple en degrés Celsius par minute, pendant une première période de temps, ce qui est un moyen particulièrement pertinent de détecter un départ de feu,
- lorsque la température mesurée par le capteur de température s'élève à une vitesse supérieure à un premier seuil d'élévation, défini en degrés Celsius par minute, pendant une première période de temps, alors le contrôleur envoie à la centrale d'alarmes les images capturées par un capteur optique dirigé vers ledit véhicule, ledit procédé comportant alors en outre une étape d'analyse visuelle du véhicule par un opérateur, et décision par ledit opérateur de contacter ou non les pompiers, ce qui permet de rapidement intervenir sur le départ de feu afin d'en limiter la propagation.
- lorsque le contrôleur envoie à la centrale d'alarmes les images capturées par un capteur optique dirigé vers ledit véhicule, le procédé peut comprendre en outre une étape de décision par l'opérateur d'envoyer ou non aux pompiers les images capturées par un capteur optique dirigé vers ledit véhicule, ce qui leur permet de préparer au mieux une éventuelle intervention.
- ledit procédé peut comporter une étape d'analyse visuelle du véhicule par un opérateur, et décision par ledit opérateur d'ordonner ou non au contrôleur de commander au module d'extinction la libération dudit agent extincteur hors dudit au moins un module d'extinction, ce qui permet de ne relâcher l'agent extincteur qu'après vérification visuelle du départ de feu,
- lorsque la température mesurée par le capteur de température s'élève à une vitesse supérieure à un deuxième seuil d'élévation, défini en degrés Celsius par minute, pendant une deuxième période de temps, alors le contrôleur peut commander au module d'extinction la libération dudit agent extincteur hors dudit au moins un module d'extinction, ce afin de ralentir le départ de feu au plus vite après sa détection.

La présente invention sera mieux comprise à la lecture de la description détaillée qui fait suite, en référence aux figures annexées dans lesquelles :

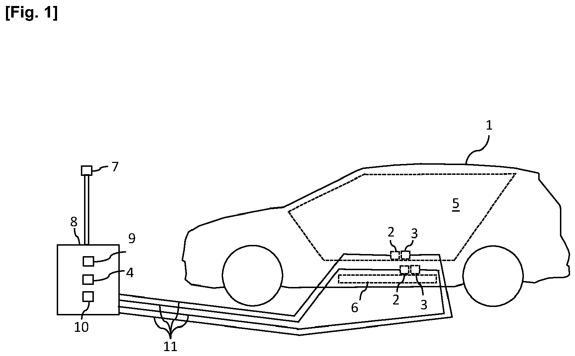

[Fig. 1] La fig. 1 est une vue schématique d'un mode de réalisation particulier de l'invention.

L'ensemble selon l'invention comporte un système de sécurité et un ou plusieurs véhicules 1 de type électrique ou hybride électrique. Un véhicule électrique est un véhicule dont la propulsion est assurée exclusivement par un ou plusieurs moteurs électriques, et un véhicule hybride électrique est un véhicule qui comporte un ou plusieurs moteurs électriques aptes à assurer la propulsion du véhicule, et un ou plusieurs autres types de moteurs aptes à assurer la propulsion du véhicule, généralement thermiques.

Le véhicule 1 peut être de toute catégorie, notamment une voiture, un camion, une camionnette, ou encore une motocyclette.

Le véhicule 1 est à l'arrêt, par exemple dans un garage. Son moteur est de préférence éteint.

Le système de sécurité comporte au moins un capteur de température 2 disposé sur chaque véhicule 1 et un module d'extinction 3 disposé sur chaque véhicule 1. Le système de sécurité comporte aussi un contrôleur 4 disposé hors des véhicules 1. Le contrôleur 4 n'est en contact avec aucun véhicule 1, et il est disposé de préférence à une distance minimale du véhicule 1 le plus proche, par exemple au moins 1 m. Ces dispositions permettent de réduire les risques que le contrôleur soit atteint par un départ de feu provenant du véhicule, ce qui rend le système plus robuste.

Le contrôleur 4 comporte un moyen de réception de données en provenance du au moins un capteur de température 2. Ces données sont de préférence des mesures de température, reçues par le contrôleur 4 à une fréquence fixe, par exemple une mesure par minute. On peut prévoir que la fréquence d'envoi des mesures du au moins un capteur de température 2 soit plus élevée lorsque les températures mesurées sont au-dessus d'un seuil prédéterminé, afin de détecter le plus tôt possible le départ d'une combustion. Ces données peuvent aussi être des signaux envoyés par le au moins un capteur de température 2 au contrôleur 4 lorsqu'un seuil de température est dépassé, ou lorsqu'un seuil de vitesse d'élévation de température, défini par exemple en degrés Celsius par minute, est dépassé. De préférence le au moins un capteur de température 2 est un capteur simple, par exemple un thermocouple, qui n'envoie que des mesures brutes au contrôleur 4. Ceci permet de diminuer les coûts du système de sécurité qui peut comporter plusieurs capteurs de température, le au moins un capteur de température 2 pouvant en plus être détruit lors d'une combustion.

Le contrôleur 4 comporte aussi un moyen de décision de l'envoi ou non d'une alarme à une centrale d'alarme. Cette décision est basée sur les données reçues en provenance du capteur de température 2. Le contrôleur peut par exemple décider d'envoyer une alarme lorsqu'un seuil de température est atteint ou dépassé. De préférence le moyen de décision est configuré pour calculer la vitesse d'élévation de la température mesurée par le capteur de température 2, par exemple en degrés Celsius par minute. Ceci permet de détecter plus finement un départ de combustion, les mesures étant moins dépendantes de la température ambiante.

Le contrôleur 4 comporte encore un moyen d'envoi d'une alarme à une centrale d'alarmes. Ce moyen d'envoi peut communiquer avec un émetteur sans fil, par exemple un émetteur 4G.

Le contrôleur 4 comporte enfin un moyen de commande apte à commander au module d'extinction 3 la libération de l'agent extincteur hors dudit au moins un module d'extinction 3. Ainsi en cas de départ de combustion détecté, le contrôleur 4 peut prendre une décision, soit automatiquement, soit après validation par un opérateur humain, de commander la libération de l'agent extincteur afin de ralentir le départ de la combustion. Ceci permet de gagner du temps avant l'arrivée des pompiers, et de diminuer les risques de propagation du feu hors du véhicule et notamment aux véhicules voisins ou au bâtiment dans lequel se trouve le véhicule.

Le au moins un capteur de température 2 peut notamment être disposé sur l'extérieur du véhicule 1, sur son dessus, son dessous, un côté, ou encore à l'avant ou à l'arrière. Il peut également être disposé à l'intérieur du véhicule, notamment dans son habitacle 5, à proximité d'au moins une batterie 6, dans le compartiment moteur, ou encore dans le coffre. De préférence, au moins un capteur de température 2 est disposé dans l'habitacle 5 du véhicule 1 et/ou sur au moins une batterie 6.

Un avantage d'un capteur de température 2 placé sur une batterie 6, par exemple par l'intermédiaire d'une pince disposée sur le caisson de la batterie 6, est qu'une combustion spontanée de cette batterie 6 peut alors être détectée au plus tôt par le contrôleur 4. Un véhicule 1 peut comporter plusieurs batteries 6, il faut donc idéalement disposer un capteur de température 2 sur chaque batterie 6.

Un avantage d'un capteur de température 2 placé dans l'habitacle 5, est qu'il permet de détecter un feu dans une partie du véhicule 1 qui est en général très inflammable de par la présence de moquettes, mousses, etc.

Il est aussi particulièrement avantageux de disposer au moins un module d'extinction 3 dans l'habitacle 5, afin que l'agent extincteur puisse agir contre le feu directement là où il se propage rapidement. De plus la batterie 6 du véhicule étant souvent située sous l'habitacle 5, un feu partant d'une batterie 6 prendra très rapidement dans l'habitacle 5, il est donc pertinent d'agir rapidement dans l'habitacle 5. Si le module d'extinction 3 est disposé dans l'habitacle 5 d'un véhicule 1 dont les portes ont été retirées, on peut disposer des couvertures anti-feu sur les ouvertures des portes. Ainsi l'agent extincteur restera au maximum dans l'habitacle 5 et sera plus efficace pour ralentir la combustion dans le véhicule 1.

Si au moins un module d'extinction 3 est disposé dans l'habitacle 5, alors il est particulièrement avantageux de disposer également un capteur de température, pour que le contrôleur puisse prendre en compte la température de l'habitacle 5 avant d'y commander la libération de l'agent extincteur.

Le au moins un module d'extinction 3 peut également être disposé sur l'extérieur du véhicule 1, sur son dessus, son dessous, un côté, ou encore à l'avant ou à l'arrière. Le au moins un module d'extinction 3 peut également être disposé à l'intérieur du véhicule, notamment dans le compartiment moteur, dans le coffre, ou encore dans un support permettant son positionnement au plus près de la au moins une batterie 6 du véhicule 1, ce qui permet de ralentir le départ de feu au plus tôt.

En fonction des caractéristiques de chaque catégorie de véhicules 1, les placements du au moins un capteur de température 2 et du au moins un module d'extinction 3 sur le au moins un véhicule 1 peuvent varier.

Le module d'extinction 3 peut comporter une cartouche d'extinction, comportant de préférence un déclencheur pyrotechnique. Il s'agit par exemple d'une cartouche de type Dynameco (Marque déposée) 300 E03. L'agent extincteur du module d'extinction 3 peut être n'importe quel agent extincteur connu. Il s'agit de préférence d'un carbonate de potassium, qui présente l'avantage d'inhiber la combustion sur une certaine durée.

Le module d'extinction 3 peut être équipé d'un connecteur permettant de facilement le retirer du système de sécurité, afin d'en assurer la maintenance ou le remplacement sans avoir à déplacer le système de sécurité complet. Ainsi lors d'une opération de maintenance du module d'extinction 3, un module d'extinction de remplacement peut être connecté à la place du module en maintenance afin d'assurer la continuité de fonctionnement du système de sécurité.

L'ensemble selon l'invention peut comporter plusieurs véhicules 1. Ainsi un système de sécurité unique permet de centraliser la détection de départ de combustion, et l'envoi éventuel d'alarmes, ce qui permet de réduire les coûts. Par exemple des véhicules disposés l'un à côté de l'autre dans un garage peuvent être intégrés à un ensemble unique.

Le système de sécurité peut comporter au moins un capteur optique 7, par exemple une caméra. Le capteur optique permet, en cas d'envoi d'une alarme suite à une détection de départ de combustion, d'envoyer également des images du véhicules 1. Un opérateur humain ou informatique peut alors analyser ces images pour vérifier si un feu est visible, et décider ou non d'ordonner au contrôleur 4 de commander la libération de l'agent extincteur au module d'extinction 3. En cas de pluralité de véhicules 1, le capteur optique 7 peut comporter un objectif de type grand angle pour pouvoir tous les surveiller.

Le système de sécurité peut comporter un enregistreur vidéo, afin d'enregistrer les images capturées par le capteur optique 7. En cas de combustion spontanée d'un véhicule 1, ceci permet d'analyser cette combustion et d'en tirer des enseignements pour mieux gérer ce problème à l'avenir.

Le système de sécurité comporte de préférence un boîtier 8 dans lequel est disposé le contrôleur 4. Le boîtier 8 peut être mis sur des roulettes, afin d'être facilement déplacé à proximité des véhicules 1 que l'on souhaite intégrer à l'ensemble selon l'invention. Le boîtier 8 peut être ignifugé ou protégé contre un feu de toute autre manière.

Si le système de sécurité comporte un capteur optique 7, celui-ci peut être disposé sur un mât fixé au boîtier 8.

Le système de sécurité peut encore comporter un émetteur 9 lui permettant d'envoyer une alarme à une centrale d'alarme. L'émetteur 9 est de préférence un émetteur sans fil, par exemple de type 4G. L'émetteur est de préférence disposé dans le boîtier 8.

Le système de sécurité peut encore comporter une batterie de sécurité 10 et/ou un moyen d'alimentation par le réseau électrique. De préférence le système de sécurité comporte une batterie de sécurité 10 et un moyen d'alimentation par le réseau électrique. Le système de sécurité peut ainsi être généralement alimenté par le réseau d'alimentation électrique, ce qui est plus simple d'utilisation, et la batterie de sécurité 10 est présente en cas d'interruption de cette alimentation. La batterie de sécurité 10 peut par exemple être dimensionnée pour pouvoir alimenter le système de sécurité pendant 24, 48 ou 72 h, ce qui permet par exemple de couvrir un week-end de fermeture d'un garage sans présence humaine.

La batterie 10 permet que le système soit autonome et réduit les risques qu'il soit inopérant à cause d'un défaut de fonctionnement de la batterie du véhicule ou d'un réseau électrique, par exemple à cause d'un incendie.

Le système de sécurité peut enfin comporter des câbles 11, permettant de relier le au moins un capteur de température 2 au contrôleur 4, et le au moins un module d'extinction 3 au contrôleur 4. Les câbles 11 peuvent comprendre une interface de branchement permettant un branchement et un débranchement facile au boîtier 8. Il est ainsi aisé d'intégrer un véhicule à un ensemble selon l'invention en plaçant le au moins un capteur de température 2 et le au moins un module d'extinction 3 sur le véhicule, puis en branchant les câbles 11 au boîtier 8. Les câbles 11 sont de préférence extensibles, afin de donner de la flexibilité au système. Les câbles 11 sont de préférence ignifugés afin d'éviter qu'ils ne propagent un feu hors du véhicule 1.

Le contrôleur 4 comporte de préférence un module de surveillance du système de sécurité, permettant de détecter si un élément du système de surveillance tel qu'un capteur de température 2, un module d'extinction 3, ou encore un capteur optique 7, une batterie de sécurité 10 ou un câble 11 est débranché ou défectueux. Une alarme spécifique peut être envoyée par le contrôleur 4 à la centrale d'alarmes en cas de défaut.

Le système de sécurité peut encore comporter un module d'ouverture des locaux dans lequel il est installé. Ce module peut permettre de déclencher l'ouverture des locaux en fonction d'un signal d'ouverture qui peut être transmis depuis l'extérieur de l'ensemble selon l'invention, par exemple par radio, par un appel téléphonique spécifique, ou par un signal sonore tel qu'une sirène de pompiers, à l'initiative par exemple de pompiers souhaitant entrer dans les locaux pour combattre un début de feu. Alternativement ou en complément, le module peut permettre de déclencher l'ouverture des locaux en fonction d'un signal d'ouverture émis depuis le contrôleur 4 du système de sécurité. Ce module d'ouverture est particulièrement intéressant dans le cas d'un départ d'incendie le weekend ou de nuit quand aucune personne n'est présente sur les lieux. Elle permet en effet aux pompiers d'accéder au site sans avoir à attendre qu'une personne ne vienne l'ouvrir. Il est bien entendu que l'ouverture des locaux peut être conditionnée par l'occurrence de plusieurs événements combinés comme : le dépassement d'un seuil de température ou d'élévation de température et la présence d'un son de sirène de pompier et/ou l'envoi d'un signal permettant l'ouverture des locaux.

Le système de sécurité peut enfin comporter un détecteur de fumées. Le contrôleur 4 peut ainsi être prévenu de la présence de fumées et envoyer une alarme à la centrale d'alarmes.

L'ensemble selon l'invention peut être installé et utilisé selon le procédé suivant :
- le cas échéant, arrivée d'un véhicule 1 dans un garage, qu'il soit neuf, pour réparation ou accidenté,
- le cas échéant, installation du système de sécurité à proximité du véhicule 1, de préférence facilité par le fait qu'il comporte un boîtier monté sur roulettes et qu'il peut être raccordé à une simple prise de courant,
- disposition d'au moins un capteur de température 2 sur ledit véhicule 1, par exemple dans l'habitacle 5 et/ou sur une batterie 6 du véhicule 1,
- disposition d'au moins un module d'extinction 3 comportant un agent extincteur sur ledit véhicule 1, par exemple dans l'habitacle 5 du véhicule 1,
- réception de données en provenance du capteur de température 2 par un contrôleur 4, lesdites données étant par exemples des mesures de température,
- en fonction des données reçues, décision par ledit contrôleur 4 d'envoyer ou non une alarme à une centrale d'alarmes. Par exemple le contrôleur 4 décide d'envoyer une alarme, dès que la température mesurée par le capteur de température est supérieure à un premier seuil absolu, compris par exemple entre 50°C et 80°C. Un autre mode de fonctionnement possible est que le contrôleur décide d'envoyer une alarme dès que la température mesurée par le capteur de température s'élève à une vitesse supérieure à un premier seuil d'élévation, défini par exemple en degrés Celsius par minute, pendant une première période de temps, par exemple compris entre 3 et 5°C par minute, sur une durée de 1 minute.

Une alarme est alors envoyée par ledit contrôleur à une centrale d'alarmes par l'intermédiaire d'un émetteur, par exemple un émetteur 4G.

Le contrôleur peut aussi être configuré pour envoyer une pré alarme dès que la température mesurée par le capteur de température s'élève à une vitesse supérieure à un premier seuil d'élévation, défini par exemple en degrés Celsius par minute, pendant une première période de temps, par exemple compris entre 3 et 5°C par minute, sur une durée de 1 minute ; cela correspond par exemple à une prise de température toutes les minutes, et une mesure donne un niveau supérieur de 3 à 5°C par rapport à la mesure précédente.

Si la mesure suivante, encore une minute plus tard redonne une valeur plus basse, la pré alarme est ignorée.

Si au contraire la mesure suivante est à nouveau plus élevée, la pré alarme est confirmée par l'envoi d'une alarme. On peut décider que l'alarme est confirmée pour une élévation de température comprise entre 20 et 30°C.

Dans le cas où le système de sécurité comprend un capteur optique 7, le procédé ci-dessus peut comprendre une étape lors de laquelle lorsque la température mesurée par le capteur de température 2 s'élève à une vitesse supérieure à un premier seuil d'élévation, défini en degrés Celsius par minute, alors le contrôleur 4 envoie à la centrale d'alarmes les images capturées par un capteur optique 7 dirigé vers ledit véhicule 1. Alternativement l'envoi d'images peut être réalisé par le contrôleur 4 dès que la température mesurée par le capteur de température 2 est supérieure au premier seuil absolu. Les images peuvent être utilisées par un opérateur humain ou informatique, par l'intermédiaire d'un logiciel de reconnaissance d'image, pour constater ou non un départ de feu visible, et décider ou non de contacter les pompiers. Les images peuvent être envoyées aux pompiers, qui peuvent alors décider de se rendre ou non sur les lieux, et de préparer au mieux leur intervention en fonction de la situation visuelle : présence de fumées, flammes, véhicules adjacents en feu, etc. Alternativement ou en complément, les images peuvent permettre à un opérateur humain ou informatique de décider d'ordonner au contrôleur 4 de commander au module d'extinction 3 la libération de l'agent extincteur hors du moyen d'extinction. La commande de libération peut concerner un module d'extinction 3 différent selon le capteur de température 2 pour lequel un seuil de température ou d'élévation de température a été dépassé.

Enfin, le procédé peut comprendre une étape lors de laquelle lorsque la température mesurée par l'un desdits au moins un capteur de température 2, par exemple un capteur disposé dans l'habitacle du véhicule, s'élève à une vitesse supérieure à un deuxième seuil d'élévation, défini en degrés Celsius par minute, par exemple comprise entre 6 et 10 °C par minute ou encore bien plus élevée, allant jusqu'à 30 ou même 50°C sur une durée de une minute, alors le contrôleur 4 commande au module d'extinction 3 la libération de l'agent extincteur hors du au moins un module d'extinction 3. Alternativement, dans un mode de fonctionnement différent, le contrôleur 4 commande au module d'extinction la libération dudit agent extincteur hors dudit au moins un module d'extinction 3 dès que la température mesurée par le capteur de température 2 est supérieure au deuxième seuil absolu, par exemple comprise entre 90 et 120 °c. La commande de libération peut concerner un module d'extinction 3 différent selon le capteur de température 2 pour lequel un seuil de température ou d'élévation de température a été dépassé.

Les premier et deuxième seuils d'élévation, ainsi que les premier et deuxième seuils absolus, peuvent être identiques ou différents.

Le contrôleur peut aussi contrôler le bon fonctionnement des capteurs de température, et envoyer une alarme dès qu'un des capteurs de température est défaillant. Par exemple s'il s'agit de thermocouples, la mesure se fait selon une mesure de résistance ; lorsque la résistance devient infinie, le thermocouple est hors d'usage. On peut alors décider de mettre en route une prise d'images en continu, pour permettre une détection d'un éventuel début d'incendie, malgré la défaillance d'un capteur de température. Ceci est particulièrement intéressant si le capteur de température défaillant est celui qui est disposé dans l'habitacle, et qu'il n'y en a pas d'autre dans l'habitacle.

Bien que la description ci-dessus se base sur des modes de réalisation particuliers, elle n'est nullement limitative de la portée de l'invention, et des modifications peuvent être apportées, notamment par substitution d'équivalents techniques ou par combinaison différente de tout ou partie des caractéristiques développées ci-dessus.

## Revendications

1. Ensemble comportant un système de sécurité et au moins un véhicule (1 ) électrique ou hybride électrique, ledit système de sécurité comprenant :
- au moins un capteur de température (2) disposé sur chacun desdits au moins un véhicule (1),
- un contrôleur (4) disposé hors desdits au moins un véhicule (1), ledit contrôleur (4) comportant :
- un moyen de réception de données en provenance dudit au moins un capteur de température (2),
- un moyen de décision de l'envoi ou non d'une alarme à une centrale d'alarmes en fonction des données reçues,
- un moyen d'envoi de ladite alarme,
- un boîtier (8) dans lequel sont disposés le contrôleur (4), un émetteur et le cas échéant une batterie de sécurité (10), ledit au moins un capteur de température (2) étant relié audit boîtier (8) par des câbles (11).

2. Ensemble selon la revendication précédente, dans lequel ledit système de sécurité comprend en outre au moins un module d'extinction (3) comportant un agent extincteur, disposé sur chacun desdits au moins un véhicule (1), et ledit contrôleur (4) comporte en outre un moyen de commande apte à commander au module d'extinction (3) la libération dudit agent extincteur hors dudit au moins un module d'extinction (3).

3. Ensemble selon la revendication précédente, dans lequel ledit contrôleur (4) est configuré pour calculer la vitesse d'élévation de la température mesurée par ledit capteur de température (2), par exemple en degrés Celsius par minute.

4. Ensemble selon l'une des revendications 2 ou 3, dans lequel au moins un capteur de température (2) et au moins un module d'extinction (3) sont disposés dans l'habitacle (5) dudit véhicule (1).

5. Ensemble selon l'une des revendications précédentes, dans lequel au moins un capteur de température (2) est disposé sur au moins une batterie (6) dudit véhicule (1), par exemple par l'intermédiaire d'une pince disposée sur un caisson de ladite au moins une batterie (6).

6. Ensemble selon l'une des revendications précédentes, dans lequel le système de sécurité comporte au moins un capteur optique (7) apte à capturer des images d'au moins un desdits véhicules (1).

7. Ensemble selon l'une des revendications précédentes, comportant au moins deux véhicules (1) électriques ou hybride électriques.

8. Procédé d'installation et d'utilisation d'un ensemble selon l'une des revendications précédentes comportant les étapes suivantes :
- disposition d'au moins un capteur de température (2) sur ledit véhicule (1) à l'arrêt,
- de préférence, disposition d'au moins un module d'extinction (3) comportant un agent extincteur sur ledit véhicule (1),
- réception de données en provenance du capteur de température (2) par un contrôleur (4),
- en fonction des données reçues, décision par ledit contrôleur (4) d'envoyer ou non une alarme à une centrale d'alarmes.

9. Procédé selon la revendication précédente, dans lequel ladite décision prise par ledit contrôleur (4) est d'envoyer une alarme dès que la température mesurée par le capteur de température (2) s'élève à une vitesse supérieure à un premier seuil d'élévation, défini par exemple en degrés Celsius par minute, pendant une première période de temps.

10. Procédé selon l'une des revendications 8 à 9, dans lequel lorsque la température mesurée par le capteur de température (2) s'élève à une vitesse supérieure à un premier seuil d'élévation, défini en degrés Celsius par minute, pendant une première période de temps, alors le contrôleur (4) envoie à la centrale d'alarmes les images capturées par un capteur optique (7) dirigé vers ledit véhicule (1), ledit procédé comportant alors en outre une étape d'analyse visuelle du véhicule (1) par un opérateur, et décision par ledit opérateur de contacter ou non les pompiers.

11. Procédé selon la revendication précédente, dans lequel lorsque le contrôleur (4) envoie à la centrale d'alarmes les images capturées par un capteur optique (7) dirigé vers ledit véhicule (1), le procédé comprend en outre une étape de décision par l'opérateur d'envoyer ou non aux pompiers les images capturées par un capteur optique (7) dirigé vers ledit véhicule (1).

12. Procédé selon l'une des revendications 8 à 11, dans lequel lorsque la température mesurée par le capteur de température (2) s'élève à une vitesse supérieure à un premier seuil d'élévation, défini en degrés Celsius par minute, pendant une première période de temps, alors le contrôleur (4) envoie à la centrale d'alarmes les images capturées par un capteur optique (7) dirigé vers ledit véhicule, ledit procédé comportant alors en outre une étape d'analyse visuelle du véhicule (1) par un opérateur, et décision par ledit opérateur d'ordonner ou non au contrôleur de commander au module d'extinction (3) la libération dudit agent extincteur hors dudit au moins un module d'extinction (3).

13. Procédé selon l'une des revendications 8 à 12, dans lequel lorsque la température mesurée par l'un desdits au moins un capteur de température (2) s'élève à une vitesse supérieure à un deuxième seuil d'élévation, défini en degrés Celsius par minute, pendant une deuxième période de temps, alors le contrôleur (4) commande au module d'extinction (3) la libération dudit agent extincteur hors dudit au moins un module d'extinction(3).
